# EUROPEAN PATENT APPLICATION

(11) **EP 4 666 918 A1**
(43) Date of publication of application: **24.12.2025**
(21) Application number: 25173537.9
(22) Date of filing: 30.04.2025
(51) Int. Cl.: A47J 45/07

(54) **HANDLE FOR COOKWARE**

(30) Priority: 20.06.2024 CN 202421432750 U
(71) Applicant: Taizhou Jingyue International Trade Co., Ltd., Taizhou City Zhejiang (CN)
(72) Inventor: ZHANG, Liping, Taizhou City (CN)
(74) Representative: Chung, Hoi Kan

(57) **Abstract**

The present invention provides a handle for a cookware and belongs to the technical field of cookers, which solves a problem that the handle and a cookware body are prone to loosening during use due to a simple unlocking operation, and includes a body with a clamping opening formed on a lower side of a front end and a hand pressing handle with one end hinged in a lower side of the body. The hand pressing handle can be swung into the body around a hinge point to enable the clamping opening to retract along a front-rear direction. A toggling member is hinged in the body, the toggling member can push the hand pressing handle to swing outward around the hinge point toward the lower side of the body when rotating, to enable the clamping opening to increase along the front-rear direction.

## Description

### TECHNICAL FIELD

The present invention belongs to the technical field of cookers and relates to a handle for a cookware.

### BACKGROUND

Existing cookwares include a cookware body and a handle, and the handle is directly fixed to the side of the cookware body through bolts. However, such a structure results in a relatively large storage space required for the cookware. Therefore, the Chinese patent with application No. 202221205624.3 discloses a handle, including a handle body, a hand pressing handle, a connecting rod, and a movable clamping jaw. The handle body is provided with an accommodating cavity, the accommodating cavity is communicated with an external environment where the handle body is located, the handle body is provided with a fixed clamping jaw, the hand pressing handle is disposed in the accommodating cavity, the hand pressing handle is connected to the handle body through a first pin shaft, and the hand pressing handle can rotate around the first pin shaft and can rotate out of the accommodating cavity. The connecting rod is disposed in the accommodating cavity, the connecting rod is connected to the hand pressing handle through a second pin shaft, and the hand pressing handle can drive the connecting rod to rotate around the second pin shaft. The movable clamping jaw is configured to be matched with the fixed clamping jaw to clamp and fix a container body, a part of the movable clamping jaw is disposed in the accommodating cavity, the movable clamping jaw is connected to the connecting rod through a third pin shaft, and the connecting rod can drive the movable clamping jaw to move. After the hand pressing handle is pressed, the connecting rod drives the movable clamping jaw to move in a first direction (the first direction is a direction in which the movable clamping jaw performs a clamping movement), so that the first pin shaft, the second pin shaft, and the third pin shaft form a preset position included angle. The preset position included angle is opposite to a direction in which the movable clamping jaw is pushed, to lock the movable clamping jaw, and the movable clamping jaw is in a clamping state. After the hand pressing handle is pushed, the position included angle formed by the first pin shaft, the second pin shaft, and the third pin shaft changes. The movable clamping jaw can be pushed to move in a second direction (the second direction is a direction in which the movable clamping jaw performs an opening movement), to unlock the movable clamping jaw, and the movable clamping jaw is in an open state. Through the above configurations, the handle can be detachably connected to the cookware, improving storage convenience of the cookware.

To enable a user to conveniently unlock the movable clamping jaw, the handle is further provided with a toggling member mounted on the handle body. The toggling member is rotatably connected to the handle body, and the toggling member is provided with a toggling portion and a pushing portion. The toggling portion is located in the external environment where the handle is located (that is, the toggling portion extends out of the handle body), and the pushing portion is located in the accommodating cavity. When the handle needs to be detached, the user only needs to toggle the toggling portion, and the toggling member may rotate relative to the handle body. In this way, the pushing portion of the toggling member may push the hand pressing handle, thereby pushing the hand pressing handle to move to unlock the movable clamping jaw. However, since the toggling portion directly extends out of the handle body and is simple in an unlocking operation, in practice, it is easy for the user to accidentally touch the toggling portion to cause loosening between the handle and the cookware during use.

### SUMMARY

In view of the above problems in the prior art, a purpose of the present invention is to provide a handle for a cookware, to solve a problem that the handle and a cookware body are prone to loosening during use due to a simple unlocking operation.

The purpose of the present invention may be achieved by the following technical solution.

A handle for a cookware, including a body with a clamping opening formed on a lower side of a front end and a hand pressing handle with one end hinged in a lower side of the body, where the hand pressing handle can be swung into the body around a hinge point to enable the clamping opening to retract along a front-rear direction, a toggling member is hinged in the body, the toggling member can push the hand pressing handle to swing outward around the hinge point toward the lower side of the body when rotating, to enable the clamping opening to increase along the front-rear direction, the toggling member is provided with a force-bearing portion, the force-bearing portion is located in the body, two unlocking members are slidably connected in the body along a width direction respectively, the two unlocking members are located on two sides of the force-bearing portion along the width direction of the body, the two unlocking members are partially located on an outer side of the body, and when approaching each other, the two unlocking members can be in contact with the force-bearing portion simultaneously and push the force-bearing portion to enable the toggling member to rotate.

When the handle needs to be connected to a cookware body, the clamping opening of the handle is clamped on an opening portion of the cookware body and then presses the hand pressing handle upward. The hand pressing handle is swung into the body by using the hinge point between the hand pressing handle and the body as a support point and enables the clamping opening to retract along the front-rear direction. Therefore, the handle firmly clamps the cookware body. When the handle needs to be detached from the cookware body, a thumb and an index finger that are of a user are clamped on two sides of the body and respectively abut against the two unlocking members, and then simultaneously press the two unlocking members to slide toward the inside of the body simultaneously. In this way, the two unlocking members approach each other and are in contact with the force-bearing portion simultaneously to push the force-bearing portion, so that the toggling member rotates to push the hand pressing handle to swing outward around the hinge point between the hand pressing handle and the body toward the lower side of the body. In this way, the clamping opening increases along the front-rear direction to loosen the cookware body.

In the handle for a cookware, the two unlocking members are slidably connected in the body along the width direction respectively, and the force-bearing portion is disposed on the toggling member. The two unlocking members are located on the two sides of the force-bearing portion along the width direction of the body, so that the toggling member cannot be directly operated, and the toggling member can only rotate to unlock the handle by pressing the two unlocking members toward the inside of the body simultaneously. Therefore, the handle is not easy to be accidentally operated to loosen the cookware body during use, thereby well improving use reliability.

In the above handle for a cookware, opposite sides of the two unlocking members are respectively provided with first guiding surfaces that are obliquely formed, tilting directions of the first guiding surfaces of the two unlocking members are opposite, a distance between the two first guiding surfaces gradually increases from the lower side of the body to an upper side of the body, and the force-bearing portion abuts against the first guiding surfaces of the two unlocking members simultaneously when the hand pressing handle is located in the body.

The force-bearing portion abuts against the first guiding surfaces of the two unlocking members simultaneously when the hand pressing handle is located in the body. Since the first guiding surfaces are obliquely formed, the tilting directions of the first guiding surfaces of the two unlocking members are opposite, and the distance between the two first guiding surfaces gradually increases from the lower side of the body to the upper side of the body, when the user presses the two unlocking members toward the inside of the body, the two first guiding surfaces move along the force-bearing portion and push the force-bearing portion upward. In this way, the toggling member rotates, thereby pushing the hand pressing handle to swing outward around the hinge point toward the lower side of the body.

In the above handle for a cookware, as another technical solution, the two sides of the force-bearing portion along the width direction of the body are respectively provided with second guiding surfaces that are obliquely formed, tilting directions of the two second guiding surfaces are opposite, a direction between the two second guiding surfaces gradually increases from the lower side of the body to an upper side of the body, and the two unlocking members abut against the two second guiding surfaces respectively when the hand pressing handle is located in the body.

The two unlocking members respectively abut against the guiding surfaces that are on the two sides of the force-bearing portion along the width direction of the body when the hand pressing handle is located in the body. Since the second guiding surfaces are obliquely formed, the tilting directions of the two second guiding surfaces are opposite, and the distance between the two second guiding surfaces gradually increases from the lower side of the body to the upper side of the body, when the user presses the two unlocking members toward the inside of the body, the two unlocking members move along the abutted second guiding surfaces and push the force-bearing portion upward. In this way, the toggling member rotates, thereby pushing the hand pressing handle to swing outward around the hinge point toward the lower side of the body.

In the above handle for a cookware, the force-bearing portion is of a flat rectangular block shape, and a length of the force-bearing portion is arranged along the width direction of the body.

Through the above configurations, the force-bearing portion has certain requirements for a required force when pushed. Therefore, a situation that the force-bearing portion can be pushed to enable the toggling member to rotate by pressing a single unlocking member may be avoided, to ensure that the handle is not easy to be accidentally operated to loosen the cookware body during use.

In the above handle for a cookware, the body is internally provided with a clearance groove, the force-bearing portion can be pushed by the two unlocking members to be swung into the clearance groove, and the clearance groove is internally provided with a limiting surface that can abut against the force-bearing portion to limit a rotating angle of the toggling member.

The clearance groove provides a swinging space for the force-bearing portion, and the limiting surface formed in the clearance groove can limit the rotating angle of the toggling member by abutting against the force-bearing portion, thereby avoiding a situation that the force-bearing portion is lifted excessively to be stuck.

In the above handle for a cookware, two sides of the body along the width direction thereof are provided with penetrating mounting grooves respectively, the two unlocking members pass through the corresponding mounting grooves respectively, the body is provided with a blocking portion disposed on a groove wall of each mounting groove in a protruding manner, each unlocking member is provided with a movable groove along the width direction of the body, the blocking portion is located in the movable groove, and a length of the movable groove along the width direction of the body is greater than a length of the blocking portion along the width direction of the body.

The blocking portion is located in the movable groove, and the length of the movable groove along the width direction of the body is greater than the length of the blocking portion along the width direction of the body. In this way, it is ensured that the unlocking members can slide along the width direction of the body while ensuring that the unlocking members do not fall out of the body entirely.

In the above handle for a cookware, a reset spring is disposed in the body, the reset spring is located between the two unlocking members, the opposite sides of the two unlocking members are provided with protruding heads respectively, and two ends of the reset spring are sleeved on the two protruding heads respectively.

The two ends of the reset spring are sleeved on the two protruding heads respectively, so that the two ends of the reset spring act on the two unlocking members respectively. In other words, the two unlocking members may reset by using one reset spring, so that a structure is simpler.

In the above handle for a cookware, the unlocking member includes a pressing portion disposed as a strip-shaped button shape along a length direction of the body and an unlocking portion fixedly connected to one side of the pressing portion, the unlocking portion is located in the body and is matched with the force-bearing portion, and the protruding head and the movable groove are disposed on the unlocking portion.

The pressing portion of the unlocking member is disposed as the strip-shaped button shape along the length direction of the body, and such a shape is easier to be matched with the thumb and the index finger, thereby facilitating an operation of the user.

In the above handle for a cookware, the hand pressing handle is provided with a force-bearing surface, a front end of the force-bearing surface tilts downward relative to a rear end thereof, the toggling member is provided with a pushing portion disposed rearward, and a rear end portion of the pushing portion abuts against the rear end of the force-bearing surface when the hand pressing handle is located in the body.

When the hand pressing handle is located in the body, the rear end portion of the pushing portion abuts against the rear end of the force-bearing surface of the hand pressing handle. Since the front end of the force-bearing surface tilts downward relative to the rear end thereof, and the pushing portion is disposed rearward and obliquely downward, the pushing portion of the toggling member moves downward and forward when the force-bearing portion is pushed by the two unlocking members to enable the toggling member to rotate. Therefore, the pushing portion moves along the force-bearing surface and applies an acting force to the hand pressing handle through the force-bearing surface, thereby pushing the hand pressing handle to swing outward around the hinge point toward the lower side of the body.

In the above handle for a cookware, the body includes a handle body and a movable clamping jaw, the movable clamping jaw includes a long strip-shaped movable plate and a clamping plate fixedly connected to a front end of the movable plate, the movable plate is slidably disposed in the handle body, the clamping opening is formed by the clamping plate and a front end portion of the handle body, the hinge point of the hand pressing handle is located at a front end of the hand pressing handle, two sides of the movable plate along a width direction of the handle body are fixedly connected to a pair of connecting lugs, the two connecting lugs are disposed oppositely, a connecting rod is connected between the movable plate and the hand pressing handle, a front end of the connecting rod is hinged to a middle portion that is of the hand pressing handle and that is along a length direction of the body, a rear end of the connecting rod is hinged between the two connecting lugs, the movable plate is provided with a waist-shaped hole along the length direction of the body, and the pushing portion passes through the waist-shaped hole.

When the handle is in an unlocked state, a rear end of the hand pressing handle is located outside a lower side of the handle body, and the front end of the connecting rod tilts downward relative to the rear end thereof. Since a relative position between the connecting rod and the hand pressing handle is limited in a hinged manner, and a relative position between the connecting rod and the movable plate is also limited in a hinged manner, when the hand pressing handle is pressed in the lower side of the handle body, the connecting rod moves rearward around the hinge point between the connecting rod and the hand pressing handle, thereby driving the movable plate to move rearward, so that the clamping plate also moves rearward to enable the clamping opening to be retracted and clamped.

Compared with the prior art, in the handle for a cookware, the two unlocking members are slidably connected in the body along the width direction respectively, and the force-bearing portion is disposed on the toggling member. The two unlocking members are located on the two sides of the force-bearing portion along the width direction of the body, so that the toggling member cannot be directly operated, and the toggling member can only rotate to unlock the handle by pressing the two unlocking members toward the inside of the body simultaneously. Therefore, the handle is not easy to be accidentally operated to loosen the cookware body during use, thereby well improving use reliability.

### BRIEF DESCRIPTION OF THE DRAWINGS

FIG. 1 is a three-dimensional schematic diagram of a handle for a cookware in a locked state;
FIG. 2 is a top view of a handle for a cookware in a locked state;
FIG. 3 is a sectional view taken along A-A in FIG. 2;
FIG. 4 is a three-dimensional schematic diagram of a hand pressing handle;
FIG. 5 is a three-dimensional schematic diagram of a movable clamping jaw;
FIG. 6 is a sectional view taken along B-B in FIG. 2;
FIG. 7 is a sectional view taken along C-C in FIG. 2;
FIG. 8 is a three-dimensional schematic diagram of matching between two unlocking members and a toggling member;
FIG. 9 is a three-dimensional schematic diagram of a handle for a cookware in an unlocked state; and
FIG. 10 is a sectional view of a handle for a cookware in an unlocked state (a sectional direction is the same as that in FIG. 3).

In the drawings: 1. body; 1a. clamping opening; 2. hand pressing handle; 2a. first accommodating groove; 2a1. second abutting portion; 2b. second accommodating groove; 2c. force-bearing surface; 2d. protruding rib; 3. handle body; 3a. clearance groove; 3b. mounting groove; 3c. blocking portion; 4. movable clamping jaw; 4a. movable plate; 4a1. connecting lug; 4a2. first abutting portion; 4a3. waist-shaped hole; 4b. clamping plate; 4c. outer sleeve; 5. connecting rod; 6. first pin shaft; 7. second pin shaft; 8. third pin shaft; 9. torsion spring; 10. toggling member; 10a. pushing portion; 10b. force-bearing portion; 11. unlocking member; 11a. first guiding surface; 11b. movable groove; 11c. protruding head; 11d. pressing portion; 11e. unlocking portion; 12. reset spring.

### DETAILED DESCRIPTION OF THE EMBODIMENTS

The embodiments of the present invention are as follows, and the technical solutions of the present invention are further described below with reference to the accompanying drawings, but the present invention is not limited to these embodiments.

### Embodiment I

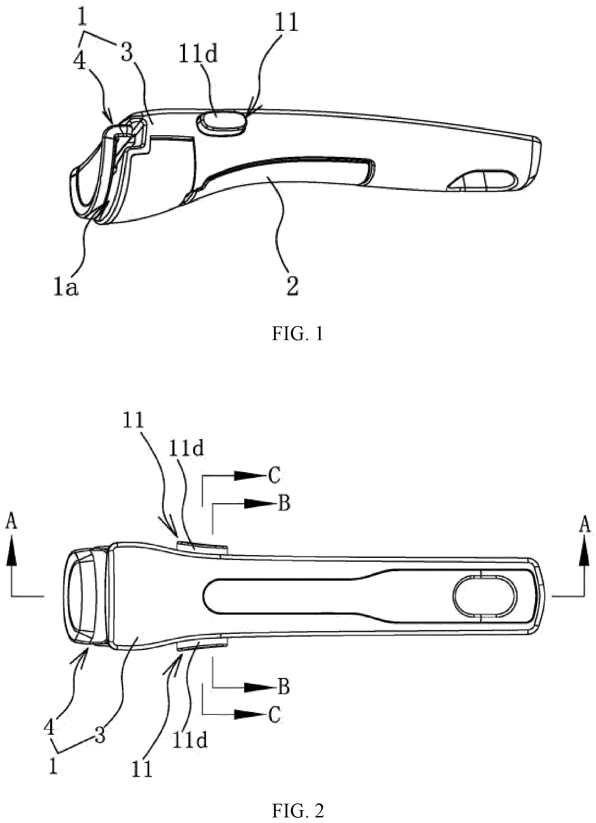

Referring to FIG. 1 to FIG. 5, a handle for a cookware includes a body 1 with a clamping opening 1a formed on a lower side of a front end and a hand pressing handle 2 with one end hinged in the lower side of the body 1, and the hand pressing handle 2 can be swung into the body 1 around a hinge point to enable the clamping opening 1a to retract along a front-rear direction. The body 1 includes a handle body 3 and a movable clamping jaw 4. The movable clamping jaw 4 includes a long strip-shaped movable plate 4a and a clamping plate 4b fixedly connected to a front end of the movable plate 4a. The movable plate 4a is slidably disposed in the handle body 3, the clamping opening 1a is formed by the clamping plate 4b and a front end portion of the handle body 3, and an outer sleeve 4c made of a silicone material is further covered outside the clamping plate 4b. Specifically, two sides of the movable plate 4a along a width direction of the handle body 3 are fixedly connected to a pair of connecting lugs 4a1. The two connecting lugs 4a1 are disposed oppositely, a connecting rod 5 is connected between the movable plate 4a and the hand pressing handle 2, a front end of the connecting rod 5 is hinged to a middle portion that is of the hand pressing handle 2 and that is along a length direction of the body 1, and a rear end of the connecting rod 5 is hinged between the two connecting lugs 4a1. An upper side of the hand pressing handle 2 is provided with a first accommodating groove 2a and a second accommodating groove 2b. The first accommodating groove 2a is located in front of the second accommodating groove 2b, and the hand pressing handle 2 is hinged to the handle body 3 in the body 1 through a first pin shaft 6. The first pin shaft 6 is located in the first accommodating groove 2a, and the front end of the connecting rod 5 is hinged in the second accommodating groove 2b through a second pin shaft 7. When the hand pressing handle 2 is swung into the handle body 3 in the body 1 around the hinge point, the connecting rod 5 is located in the second accommodating groove 2b, and the rear end of the connecting rod 5 is hinged between the two connecting lugs 4a1 through a third pin shaft 8. In this embodiment, a torsion spring 9 is sleeved on the first pin shaft 6, a first abutting portion 4a2 is disposed on a lower side of a position, close to the front end, of the movable plate 4a, and a groove wall of the first accommodating groove 2a is provided with a second abutting portion 2a1. The torsion spring 9 is located in the first accommodating groove 2a, and two ends of the torsion spring 9 abut against a rear side surface of the first abutting portion 4a2 and a front side surface of the second abutting portion 2a1 respectively. A toggling member 10 is hinged in the handle body 3 in the body 1, and the toggling member 10 can push the hand pressing handle 2 to swing outward around the hinge point toward the lower side of the body 1 when rotating, to enable the clamping opening 1a to increase along the front-rear direction. The hand pressing handle 2 is provided with a force-bearing surface 2c, and a front end of the force-bearing surface 2c tilts downward relative to a rear end thereof. The toggling member 10 is provided with a pushing portion 10a disposed rearward, and a rear end portion of the pushing portion 10a abuts against the rear end of the force-bearing surface 2c when the hand pressing handle 2 is located in the handle body 3 in the body 1. The toggling member 10 is located above the movable plate 4a, the movable plate 4a is provided with a waist-shaped hole 4a3 along a length direction of the body 1, and the pushing portion 10a passes through the waist-shaped hole 4a3. The second accommodating groove 2b of the hand pressing handle 2 is provided with a protruding rib 2d, and the force-bearing surface 2c is an upper side surface of the protruding rib 2d.

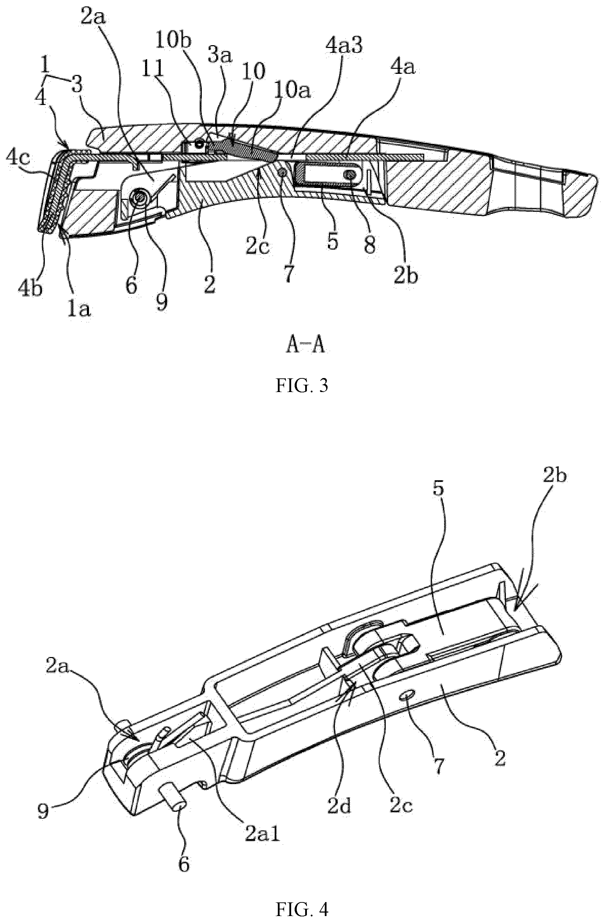

As shown in FIG. 3, FIG. 6, and FIG. 8, further, the toggling member 10 is provided with a force-bearing portion 10b, and the force-bearing portion 10b is located in the handle body 3 in the body 1. Two unlocking members 11 are slidably connected in the handle body 3 in the body 1 along the width direction respectively, the two unlocking members 11 are located on two sides of the force-bearing portion 10b along the width direction of the body 1, and the two unlocking members 11 are partially located on an outer side of the handle body 3. When approaching each other, the two unlocking members 11 can be in contact with the force-bearing portion 10b simultaneously and push the force-bearing portion 10b to enable the toggling member 10 to rotate. Specifically, opposite sides of the two unlocking members 11 are respectively provided with first guiding surfaces 11a that are obliquely formed, and tilting directions of the first guiding surfaces 11a of the two unlocking members 11 are opposite. A distance between the two first guiding surfaces 11a gradually increases from the lower side of the body 1 to an upper side of the body, and the force-bearing portion 10b abuts against the first guiding surfaces 11a of the two unlocking members 11 simultaneously when the hand pressing handle 2 is located in the body 1. The force-bearing portion 10b is of a flat rectangular block shape, and a length of the force-bearing portion 10b is arranged along the width direction of the body 1. The handle body 3 in the body 1 is internally provided with a clearance groove 3a. The force-bearing portion 10b can be pushed by the two unlocking members 11 to be swung into the clearance groove 3a, and the clearance groove 3a is internally provided with a limiting surface that can abut against the force-bearing portion 10b to limit a rotating angle of the toggling member 10.

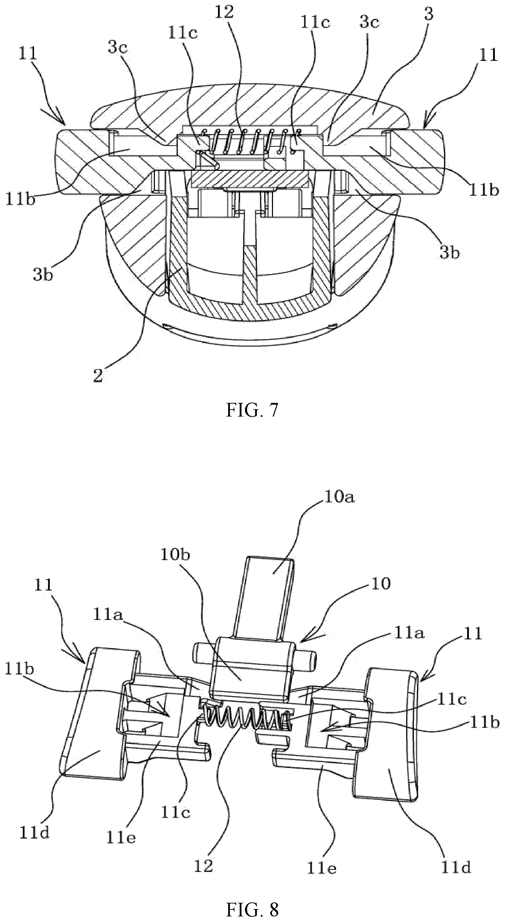

As shown in FIG. 7 and FIG. 8, two sides of the handle body 3 of the body 1 along the width direction thereof are provided with penetrating mounting grooves 3b respectively, and the two unlocking members 11 pass through the corresponding mounting grooves 3b respectively. The handle body 3 in the body 1 is provided with a blocking portion 3c disposed on a groove wall of each mounting groove 3b in a protruding manner, and each unlocking member 11 is provided with a movable groove 11b along the width direction of the body 1. The blocking portion 3c is located in the movable groove 11b, and a length of the movable groove 11b along the width direction of the body 1 is greater than a length of the blocking portion 3c along the width direction of the body 1. A reset spring 12 is disposed in the handle body 3 in the body 1, and the reset spring 12 is located between the two unlocking members 11. The opposite sides of the two unlocking members 11 are provided with protruding heads 11c respectively, and two ends of the reset spring 12 are sleeved on the two protruding heads 11c respectively. In this embodiment, the unlocking member 11 includes a pressing portion 11d disposed as a strip-shaped button shape along the length direction of the body 1 and an unlocking portion 11e fixedly connected to one side of the pressing portion 11d. The unlocking portion 11e is located in the handle body 3 in the body 1 and is matched with the force-bearing portion 10b. The protruding head 11c, the movable groove 11b, and the first guiding surface 11a are disposed on the unlocking portion 11e.

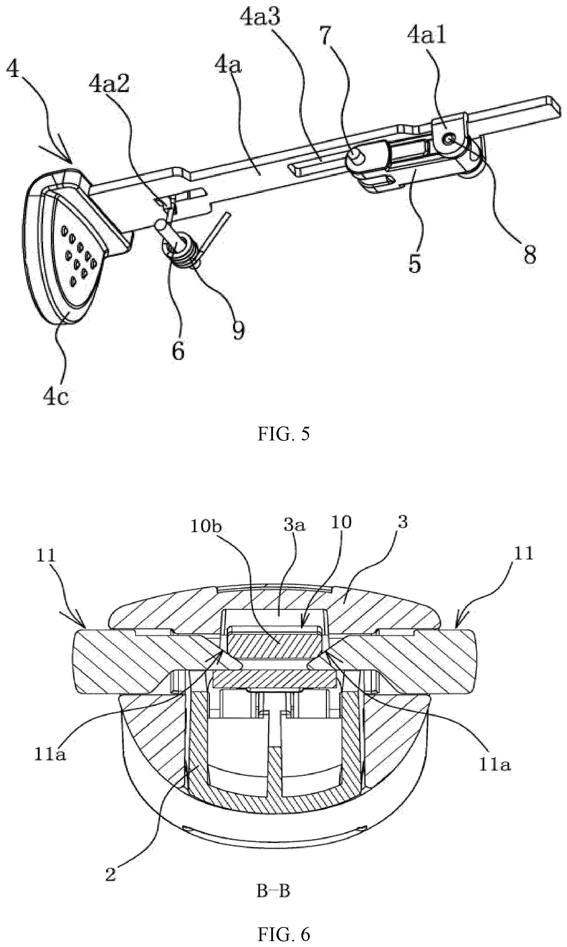

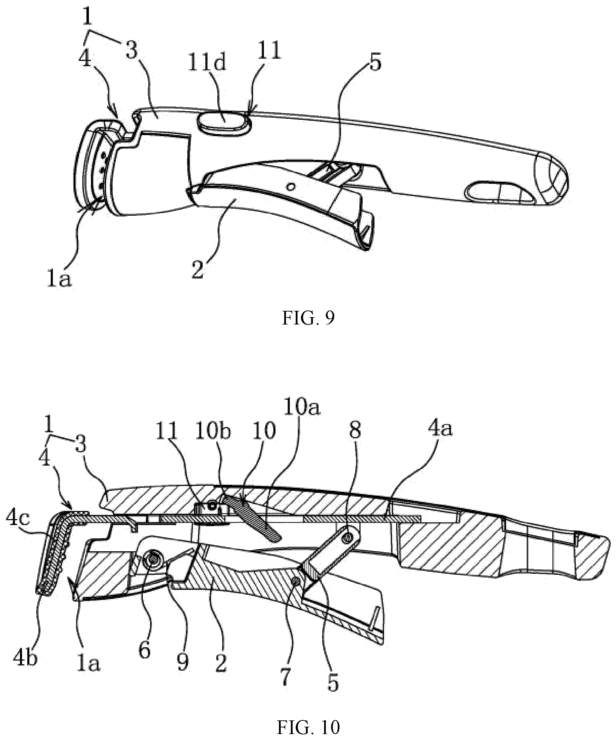

The handle is in an unlocked state when not in use, and the unlocked state is as shown in FIG. 9 and FIG. 10. At this time, a rear end of the hand pressing handle 2 is located outside the lower side of the handle body 3, and the clamping opening 1a formed by the clamping plate 4b and the front end portion of the handle body 3 is relatively large. When the handle needs to be connected to a cookware body, the clamping opening 1a is clamped on an opening portion of the cookware body and then presses the hand pressing handle 2 upward. The hand pressing handle 2 is swung into the handle body 3 by using the hinge point between the hand pressing handle and the body 1 as a support point. Since the second pin shaft 7 limits a relative position between the hand pressing handle 2 and the connecting rod 5, and the third pin shaft 8 limits a relative position between the connecting rod 5 and the movable plate 4a, when the hand pressing handle 2 is swung into the handle body 3, the connecting rod 5 moves rearward around the second pin shaft 7, thereby driving the movable plate 4a to move rearward. Therefore, the clamping plate 4b also moves rearward to enable the clamping opening 1a to be retracted and clamp the cookware body. After the hand pressing handle 2 is pressed in place, a position included angle formed by the first pin shaft 6, the second pin shaft 7, and the third pin shaft 8 is opposite to a direction of an acting force applied by the torsion spring 9 to the movable plate 4a, so that a position of the movable clamping jaw 4 is locked, and the handle can be firmly connected to the cookware body. When the handle is in a locked state, the locked state is as shown in FIG. 3 and FIG. 6, the force-bearing portion 10b of the toggling member 10 abuts against the first guiding surfaces 11a of the two unlocking members 11 simultaneously, and the pushing portion 10a of the toggling member 10 abuts against the rear end of the force-bearing surface 2c of the hand pressing handle 2.

When the handle needs to be detached from the cookware body, a thumb and an index finger that are of a user are clamped on two sides of the body 1 and respectively abut against the two unlocking members 11, and then simultaneously press the two unlocking members 11 to slide toward the inside of the handle body 3 simultaneously. In this way, the two unlocking members 11 approach each other by overcoming an action of the reset spring 12. Since the first guiding surfaces 11a of the two unlocking members 11 are obliquely formed, the tilting directions of the first guiding surfaces 11a are opposite, and the distance between the two first guiding surfaces 11a gradually increases from the lower side of the body 1 to the upper side of the body, in a process that the two unlocking members 11 approach each other, the two first guiding surfaces 11a move along the force-bearing portion 10b of the toggling member 10 and push the force-bearing portion 10b upward. In this way, the toggling member 10 rotates to enable the pushing portion 10a on the toggling member to swing downward and forward. The pushing portion 10a of the toggling member 10 abuts against the rear end of the force-bearing surface 2c of the hand pressing handle 2 when the handle is in the locked state, and the front end of the force-bearing surface 2c tilts downward relative to the rear end. Therefore, the pushing portion 10a of the toggling member 10 moves forward along the force-bearing surface 2c when swinging and applies an acting force to the hand pressing handle 2 through the force-bearing surface 2c, thereby pushing the hand pressing handle 2 to swing outward around the hinge point toward the lower side of the handle body 3. The hand pressing handle 2 swings outward around the hinge point toward the lower side of the handle body 3, so that the position included angle formed by the first pin shaft 6, the second pin shaft 7, and the third pin shaft 8 changes. In this way, a movable member moves forward under the action of the torsion spring 9 to enlarge the clamping opening 1a, thereby loosening the cookware body.

In the handle for a cookware, the two unlocking members 11 are slidably connected in the body 1 along the width direction respectively, and the force-bearing portion 10b is disposed on the toggling member 10. The two unlocking members 11 are located on the two sides of the force-bearing portion 10b along the width direction of the body 1, so that the toggling member 10 cannot be directly operated, and the toggling member 10 can only rotate to unlock the handle by pressing the two unlocking members 11 toward the inside of the body 1 simultaneously. Therefore, the handle is not easy to be accidentally operated to loosen the cookware body during use, thereby well improving use reliability.

### Embodiment II

A structure and a principle of this embodiment are basically the same as those of Embodiment I, and a difference lies in that: in this embodiment, two sides of a force-bearing portion 10b along a width direction of a body 1 are respectively provided with second guiding surfaces that are obliquely formed, tilting directions of the two second guiding surfaces are opposite, a direction between the two second guiding surfaces gradually increases from a lower side of the body 1 to an upper side of the body, and two unlocking members 11 abut against the two second guiding surfaces respectively when a hand pressing handle 2 is located in the body 1. The two unlocking members 11 respectively abut against the guiding surfaces that are on the two sides of the force-bearing portion 10b along the width direction of the body 1 when the hand pressing handle 2 is located in the body 1. Since the second guiding surfaces are obliquely formed, the tilting directions of the two second guiding surfaces are opposite, and the distance between the two second guiding surfaces gradually increases from the lower side of the body 1 to the upper side of the body, when a user presses the two unlocking members 11 toward the inside of the body 1, the two unlocking members 11 move along the abutted second guiding surfaces and push the force-bearing portion 10b upward. In this way, a toggling member 10 rotates, thereby pushing the hand pressing handle 2 to swing outward around a hinge point toward a lower side of the body 1.

Specific embodiments described herein are merely examples of the spirit of the present invention. A person skilled in the art to which the present invention belongs may make various modifications or additions to the specific embodiments described or replace the specific embodiments in a similar manner, but these will not deviate from the spirit of the present invention or exceed the scope defined by the appended claims.

## Claims

1. A handle for a cookware, comprising a body (1) with a clamping opening (1a) formed on a lower side of a front end and a hand pressing handle (2) with one end hinged in a lower side of the body (1), **characterized in that** the hand pressing handle (2) can be swung into the body (1) around a hinge point to enable the clamping opening (1a) to retract along a front-rear direction, a toggling member (10) is hinged in the body (1), the toggling member (10) can push the hand pressing handle (2) to swing outward around the hinge point toward the lower side of the body (1) when rotating, to enable the clamping opening (1a) to increase along the front-rear direction, the toggling member (10) is provided with a force-bearing portion (10b), the force-bearing portion (10b) is located in the body (1), two unlocking members (11) are slidably connected in the body (1) along a width direction respectively, the two unlocking members (11) are located on two sides of the force-bearing portion (10b) along the width direction of the body (1), the two unlocking members (11) are partially located on an outer side of the body (1), and when approaching each other, the two unlocking members (11) can be in contact with the force-bearing portion (10b) simultaneously and push the force-bearing portion (10b) to enable the toggling member (10) to rotate.

2. The handle for a cookware according to claim 1, **characterized in that** opposite sides of the two unlocking members (11) are respectively provided with first guiding surfaces (11a) that are obliquely formed, tilting directions of the first guiding surfaces (11a) of the two unlocking members (11) are opposite, a distance between the two first guiding surfaces (11a) gradually increases from the lower side of the body (1) to an upper side of the body, and the force-bearing portion (10b) abuts against the first guiding surfaces (11a) of the two unlocking members (11) simultaneously when the hand pressing handle (2) is located in the body (1).

3. The handle for a cookware according to claim 1, **characterized in that** the two sides of the force-bearing portion (10b) along the width direction of the body (1) are respectively provided with second guiding surfaces that are obliquely formed, tilting directions of the two second guiding surfaces are opposite, a direction between the two second guiding surfaces gradually increases from the lower side of the body (1) to an upper side of the body, and the two unlocking members (11) abut against the two second guiding surfaces respectively when the hand pressing handle (2) is located in the body (1).

4. The handle for a cookware according to claim 2 or 3, **characterized in that** the force-bearing portion (10b) is of a flat rectangular block shape, and a length of the force-bearing portion (10b) is arranged along the width direction of the body (1).

5. The handle for a cookware according to claim 4, **characterized in that** the body (1) is internally provided with a clearance groove (3a), the force-bearing portion (10b) can be pushed by the two unlocking members (11) to be swung into the clearance groove (3a), and the clearance groove (3a) is internally provided with a limiting surface that can abut against the force-bearing portion (10b) to limit a rotating angle of the toggling member (10).

6. The handle for a cookware according to claim 2 or 3, **characterized in that** two sides of the body (1) along the width direction thereof are provided with penetrating mounting grooves (3b) respectively, the two unlocking members (11) pass through the corresponding mounting grooves (3b) respectively, the body (1) is provided with a blocking portion (3c) disposed on a groove wall of each mounting groove (3b) in a protruding manner, each unlocking member (11) is provided with a movable groove (11b) along the width direction of the body (1), the blocking portion (3c) is located in the movable groove (11b), and a length of the movable groove (11b) along the width direction of the body (1) is greater than a length of the blocking portion (3c) along the width direction of the body (1).

7. The handle for a cookware according to claim 6, **characterized in that** a reset spring (12) is disposed in the body (1), the reset spring (12) is located between the two unlocking members (11), the opposite sides of the two unlocking members (11) are provided with protruding heads (11c) respectively, and two ends of the reset spring (12) are sleeved on the two protruding heads (11c) respectively.

8. The handle for a cookware according to claim 7, **characterized in that** the unlocking member (11) comprises a pressing portion (11d) disposed as a strip-shaped button shape along a length direction of the body (1) and an unlocking portion (11e) fixedly connected to one side of the pressing portion (11d), the unlocking portion (11e) is located in the body (1) and is matched with the force-bearing portion (10b), and the protruding head (11c) and the movable groove (11b) are disposed on the unlocking portion (11e).

9. The handle for a cookware according to claim 1, **characterized in that** the hand pressing handle (2) is provided with a force-bearing surface (2c), a front end of the force-bearing surface (2c) tilts downward relative to a rear end thereof, the toggling member (10) is provided with a pushing portion (10a) disposed rearward, and a rear end portion of the pushing portion (10a) abuts against the rear end of the force-bearing surface (2c) when the hand pressing handle (2) is located in the body (1).

10. The handle for a cookware according to claim 9, **characterized in that** the body (1) comprises a handle body (3) and a movable clamping jaw (4), the movable clamping jaw (4) comprises a long strip-shaped movable plate (4a) and a clamping plate (4b) fixedly connected to a front end of the movable plate (4a), the movable plate (4a) is slidably disposed in the handle body (3), the clamping opening (1a) is formed by the clamping plate (4b) and a front end portion of the handle body (3), the hinge point of the hand pressing handle (2) is located at a front end of the hand pressing handle, two sides of the movable plate (4a) along a width direction of the handle body (3) are fixedly connected to a pair of connecting lugs (4a1), the two connecting lugs (4a1) are disposed oppositely, a connecting rod (5) is connected between the movable plate (4a) and the hand pressing handle (2), a front end of the connecting rod (5) is hinged to a middle portion that is of the hand pressing handle (2) and that is along a length direction of the body (1), a rear end of the connecting rod (5) is hinged between the two connecting lugs (4a1), the movable plate (4a) is provided with a waist-shaped hole (4a3) along the length direction of the body (1), and the pushing portion (10a) passes through the waist-shaped hole (4a3).
